# EUROPÄISCHE PATENTANMELDUNG

(11) **EP 3 254 816 A1**
(43) Veröffentlichungstag der Anmeldung: **13.12.2017**
(21) Anmeldenummer: 16001304.1
(22) Anmeldetag: 09.06.2016
(51) Int. Cl.: B28B 3/22, B29C 47/10, B29C 47/38

(54) **EXTRUDERANORDNUNG FÜR EINEN KERAMISCHEN MASSENSTROM**

(71) Anmelder: HÄNDLE GmbH Maschinen und Anlagenbau, 75417 Mühlacker (DE)
(72) Erfinder: Bayrl, Sven, 75417 Mühlacker (DE)
(74) Vertreter: Zurhorst, Stefan

(57) **Zusammenfassung**

Die Erfindung betrifft eine Extruderanordnung für einen keramischen Massenstrom. Die Extruderanordnung umfasst einen Extruder (7) mit einem Extrudergehäuse (15) und mit einer Extruderschnecke (16), wobei sich der Extruder (7) entlang einer liegenden Extruderachse (9) erstreckt. Die Extruderanordnung umfasst des Weiteren eine in den Extruder (7) mündende Vakuumkammer (4) zur Entgasung des keramischen Massenstromes, wobei die Vakuumkammer (4) eine Kammerwand aufweist, welche um eine aufrechte Kammerachse (6) herum verläuft. Die Kammerwand (14) umschließt zumindest unmittelbar angrenzend an das Extrudergehäuse (15) einen quer zur Kammerachse (6) liegenden runden und insbesondere kreisrunden Querschnitt.

## Beschreibung

Die Erfindung betrifft eine Extruderanordnung für einen keramischen Massenstrom mit den Merkmalen nach dem Oberbegriff des Anspruchs 1.

Für die Herstellung von keramischen Produkten wie Ziegeln oder dergleichen wird ein keramischer Massenstrom mit einer bestimmten Plastizität, mit einem bestimmten Feuchtegehalt und mit einer möglichst guten Homogenität benötigt. Hierzu wird im Stand der Technik eine Extruderanordnung eingesetzt, mittels derer der keramische Massenstrom in der gewünschten Konsistenz aufbereitet, gefördert und bereitgestellt wird.

Eine solche Extruderanordnung ist beispielsweise aus der DE 10 2004 045 071 A1 bekannt und umfasst einen Extruder, einen eingangsseitig des Extruders angeordneten Mischer und eine zwischen Extruder und Mischer angeordnetes Vakuumkammer. Ein keramischer Massenstrom beispielsweise aus Ton zur Herstellung von Ziegeln oder dergleichen wird zunächst im Mischer homogenisiert. In der nachfolgenden Vakuumkammer erfolgt eine Entgasung bzw. eine Entlüftung des keramischen Massenstroms. Die Vakuumkammer erstreckt sich entlang einer aufrechten Kammerachse und mündet an ihrem in Gewichtskraftrichtung unten liegenden Ende in den Extruder. Unter Einwirkung seines Eigengewichts fällt der entlüftete keramische Massenstrom als lose Schüttung in den Eingangsbereich des Extruders. Im Extruder wird dann der erforderliche Druck aufgebaut, mittels dessen der keramische Massenstrom durch eine Düse gepresst wird.

Im praktischen Betrieb einer solchen Extruderanordnung wurde eine Reihe von Schwierigkeiten beobachtet. Insbesondere in der Vakuumkammer wurde eine inhomogene, unregelmäßige Verteilung der keramischen Masse festgestellt. In Eckbereichen des rechteckigen Grundrisses der Vakuumkammer kam es zur Bildung von trockenen Bereichen und von Materialbrücken, zu deren Verhinderung aufwändige Maßnahmen wie der Einsatz von Einräumwalzen bzw. Haspeln erforderlich wurden. Aber auch an den Einräumwalzen bzw. Haspeln konnte sich keramische Masse festsetzen und austrocknen. Jedenfalls gelangen trockene Materialteile in den Prozess, was zu qualitätsmindernder Inhomogenität des gesamten keramischen Massenstromes und zur Verstopfung der Düse führt. Die Inhomogenität der keramischen Masse insbesondere im Bereich der Vakuumkammer macht darüber hinaus den Einsatz von Zustandssensoren praktisch unmöglich. Die Bestimmung des Feuchtegehaltes in der keramischen Masse und dessen Nachführung auf einen gewünschten Sollwert gelingt im Stand der Technik nur mit Schwierigkeiten.

Der Erfindung liegt die Aufgabe zugrunde, eine gattungsgemäße Extruderanordnung derart weiterzubilden, dass die Gleichmäßigkeit des keramischen Massenstroms verbessert ist.

Diese Aufgabe wird durch eine Extruderanordnung mit den Merkmalen des Anspruchs 1 gelöst.

Die Erfindung basiert auf dem Grundgedanken, ganz allgemein in der Vakuumkammer, zumindest aber in deren Übergangsbereich zum Extruder die Ausbildung von Querschnittszonen zu vermeiden, in denen keine kontinuierliche Durchströmung stattfindet. Demnach ist gemäß der Erfindung vorgesehen, dass die Kammerwand der Vakuumkammer zumindest unmittelbar angrenzend an das Extrudergehäuse einen quer zur Kammerachse liegenden runden und insbesondere einen kreisrunden Querschnitt umschließt. Es kann ausreichen, dass ein solcher runder Querschnitt nur im unmittelbaren Übergangsbereich von der Vakuumkammer zum Extruder vorhanden ist. Bevorzugt umschließt die Kammerwand entlang der Vakuumkammerachse zumindest vom eingangsseitigen Mischereinlauf ausgehend bis zum Übergang in den Extruder einen solchen runden bzw. kreisrunden Querschnitt. Durch den Verzicht auf Ecken und Winkel bei der Querschnittsausgestaltung wird die Vakuumkammer gleichmäßig mit dem keramischen Material ausgefüllt und auch kontinuierlich durchströmt. Die Ausbildung von Materialbrücken, trockenen Stellen und anderen Unregelmäßigkeiten ist zuverlässig verhindert. Aufwändige zusätzliche Hilfsmittel wie Einräumhaspeln oder dergleichen sind nicht mehr erforderlich.

Der vorstehend umrissene erfindungsgemäße Grundgedanke wird konsequent weitergeführt bei einer Ausführungsform, bei der die Extruderanordnung ein Einspeisegehäuse zur Einspeisung des keramischen Massenstroms aus der Vakuumkammer in den Extruder umfasst. Hierbei weist das Einspeisegehäuse einen die Extruderschnecke umschließenden Extruderabschnitt und einen in den Extruderabschnitt mündenden Vakuumkammerabschnitt auf. Sowohl der Extruderabschnitt als auch der Vakuumkammerabschnitt umschließen beide jeweils einen runden und insbesondere einen kreisrunden Querschnitt. Damit wird erreicht, dass sowohl in der vertikalen Förderbewegung durch die Vakuumkammer hindurch als auch unmittelbar nachfolgend in der horizontalen Förderbewegung des Extruders ausschließlich eine Durchströmung von runden Querschnitten erfolgt, ohne dass sich irgendwo Materialansammlungen festsetzen könnten. Der Extruder wird kontinuierlich mit einem vergleichmäßigten Massenstrom beschickt.

Es kann ausreichen, dass das keramische Material allein aufgrund seiner einwirkenden Gewichtskraft von oben nach unten durch die Vakuumkammer in den Extruder fällt. In einer bevorzugten, optionalen Weiterbildung der Erfindung ist in der Vakuumkammer eine aufrechte und insbesondere koaxial zur Kammerachse ausgerichtete Zuführschnecke angeordnet. Hierbei weist die Kammerwand entlang der Zuführschnecke zweckmäßigerweise einen kreisrunden, die Zuführschnecke umschließenden Querschnitt auf. Hierdurch ist die Möglichkeit geschaffen, bereits im Eingangsbereich des Extruders einen erhöhten Arbeitsdruck bereitzustellen, wobei die rund geformte Kammerwand einen entsprechenden Druckaufbau mittels der Zuführschnecke sicherstellt. Die Druckerhöhung auf der Eingangsseite des Extruders steigert dessen Wirkungsgrad beachtlich. Außerdem trägt die Zuführschnecke zu einer Homogenisierung des in der Vakuumkammer entgasten Massenstroms bei.

Die erfindungsgemäße Ausgestaltung der Extruderanordnung erlaubt darüber hinaus, dass in vorteilhafter Weiterbildung mindestens ein Sensor für die Zustandsbestimmung des keramischen Massenstroms im Übergangsbereich von der Vakuumkammer zum Extruder und insbesondere im Einspeisegehäuse angeordnet ist. Dieser mindestens eine Sensor ist bevorzugt ein Drucksensor, ein Feuchtesensor und/oder ein Temperatursensor. Insbesondere ist der mindestens eine Sensor Teil eines Regelkreises für die Betriebsregelung der Extruderanordnung.

Die gemäß der Erfindung rund gehaltenen Querschnittsformen erlauben erstmals den Einsatz solcher Sensoren auf der Eingangsseite des Extruders, da hier gemäß der Erfindung erstmals ausreichend homogene Verhältnisse im keramischen Massenstrom für eine zuverlässige Messdatenermittlung bereitgestellt sind. Insbesondere der Einsatz der erfindungsgemäßen Zuführschnecke in der Vakuumkammer begünstigt den Einsatz solcher Sensoren. Sensoren zur sicheren Messung beispielsweise der Materialfeuchte benötigen nämlich eine konstante Belegung mit der zu messenden Masse, was bei dem lose geschütteten Material nach dem Stand der Technik bisher nicht gegeben war. Jedenfalls sind nun die Voraussetzungen für eine zuverlässige Feuchtemesseng geschaffen. Durch die Positionierung im Bereich des Vakuumaggregats ist eine kurze Regelstrecke zur Einstellung der Materialfeuchte realisiert, mittels derer die Materialfeuchte z. B. durch Bewässerungsdüsen im Eingangsbereich des Mischers in Form eines geschlossenen Regelkreises nachgeführt werden kann. Sinngemäß das Gleiche gilt auch für die Ausbildung eines Druckregelkreises. Die Positionierung eines zusätzlichen oder alternativen Drucksensors ausgangsseitig der Zuführschnecke, jedoch eingangsseitig des Extruders, ermöglicht die Ausbildung eines kurzen, schnell reagierenden Regelkreises, welcher über Drehzahlanpassung des Mischers und/oder der Förderschnecke den Betriebsdruck auf der Eingangsseite des Extruders konstant halten kann.

Ein Ausführungsbeispiel der Erfindung ist nachfolgend anhand der Zeichnung näher beschreiben. Es zeigen:
- Fig. 1: in einer schematischen Perspektivdarstellung eine erfindungsgemäß ausgeführte Extruderanordnung mit einem Mischer, mit einer Vakuumkammer und mit einem Extruder, wobei die Querschnitte der Vakuumkammer rund gehalten sind,
- Fig. 2: in einer Längsschnittdarstellung die Anordnung nach Fig. 1 mit Einzelheiten einer in der Vakuumkammer angeordneten Zuführschnecke,
- Fig. 3: in einer perspektivischen Ansicht die Vakuumkammer nach Fig. 1 mit Einzelheiten zu ihrer geometrischen Ausgestaltung, und
- Fig. 4: in einer perspektivischen Ansicht das Einspeisegehäuse des Extruders nach Fig. 1 mit einem vertikal verlaufenden Vakuumkammerabschnitt und einem horizontal verlaufenden Extruderabschnitt.

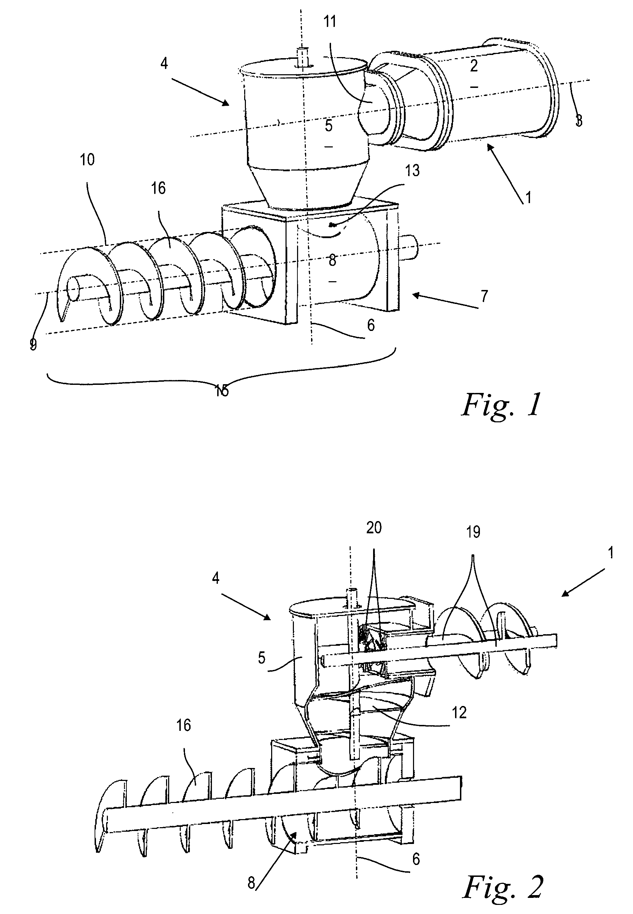

Fig. 1 zeigt in einer perspektivischen Schemadarstellung ein Ausführungsbeispiel einer erfindungsgemäß ausgeführten Extruderanordnung für die Aufbereitung eines keramischen Massenstroms beispielsweise in Form von Ton zur Ziegelherstellung oder dergleichen. Fig. 2 zeigt die Extruderanordnung nach Fig. 1 in einer Längsschnittdarstellung mit weiteren Einzelheiten, so dass nachfolgend der Einfachheit halber auf die Fig. 1 und 2 gleichzeitig Bezug genommen wird. Die Extruderanordnung umfasst einen eingangsseitigen Mischer 1, einen ausgangsseitigen Extruder 7 und dazwischen eine Vakuumkammer 4. Die Extruderanordnung ist in gewöhnlicher Betriebsposition gezeigt, wobei die nicht näher bezeichnete Hochrichtung der Gewichtskraftrichtung entspricht. Demnach erstreckt sich der Mischer 1 entlang einer liegenden, horizontalen Mischerachse 3, wobei in einem zugehörigen liegenden Mischergehäuse 2 mindestens eine liegende Mischerwelle 19 drehend antreibbar gelagert ist. Aus Fig. 2 ergibt sich, dass insgesamt zwei Mischerwellen 19 vorgesehen sind, demnach es sich bei dem gezeigten Mischer 1 um einen Doppelwellenmischer handelt. Nicht näher bezeichnete Mischerflügel und Schneckenabschnitte auf den Mischerwellen 19 durchmischen keramische Masse und Wasser, homogenisieren sie und fördern sie durch einen Satz von Schnitzelmessern 20 in die nachgeschaltete Vakuumkammer 4.

Die Vakuumkammer 4 ist aufrecht positioniert, erstreckt sich also entlang einer senkrechten, parallel zur Gewichtskraftrichtung liegenden Kammerachse 6. Die Vakuumkammer 4 weist ein Vakuumkammergehäuse 5 auf, welches seitlich mit einem Mischereinlauf 11 für den Mischer 1 versehen ist, und welches im Übrigen um die aufrechte Kammerachse 6 herum verläuft. Im Innenraum der Vakuumkammer 4 befindet sich optional eine drehend antreibbare Zuführschnecke 12, welche ebenso wie die Vakuumkammer 4 insgesamt aufrecht, hier koaxial zur Kammerachse 6 ausgerichtet ist.

Im oberen Teil der Vakuumkammer 4 wird im Betrieb ein Unterdruck aufgebracht, mittels dessen der vom Mischer 1 bereitgestellte keramische Massenstrom entlüftet bzw. entgast wird. Der solchermaßen behandelte keramische Massenstrom wird mittels der Zuführschnecke 12 nach unten zum Extruder 7 hin gefördert, wobei sich entlang der Lauflänge der Zuführschnecke 12 der Druck im keramischen Massenstrom erhöht. Aus dem anfänglichen Unterdruck kann auf diese Weise ein relativer Überdruck im Eingangsbereich des Extruders 7 erzeugt werden.

Der Extruder 7 erstreckt sich entlang einer liegenden, horizontalen Extruderachse 9 und ist bezogen auf die Gewichtskraftrichtung insgesamt unterhalb des Mischers 1 positioniert. Der Extruder 7 umfasst ein Extrudergehäuse 15, in dem eine liegende Exruderschnecke 16 drehend antreibbar gelagert ist. Das Extrudergehäuse besteht aus einem in Fig. 1 nur gestrichelt angedeuteten Schneckengehäuse 10 und einem weiter unten noch näher beschriebenen Abschnitt eines Einspeisegehäuses 8. Im Wechselspiel mit dem sie umschließenden Extrudergehäuse 15 fördert die Extruderschnecke 16 den aus der Vakuumkammer 4 eingespeisten keramischen Massenstrom unter Druckaufbau durch eine nicht dargestellte Düse.

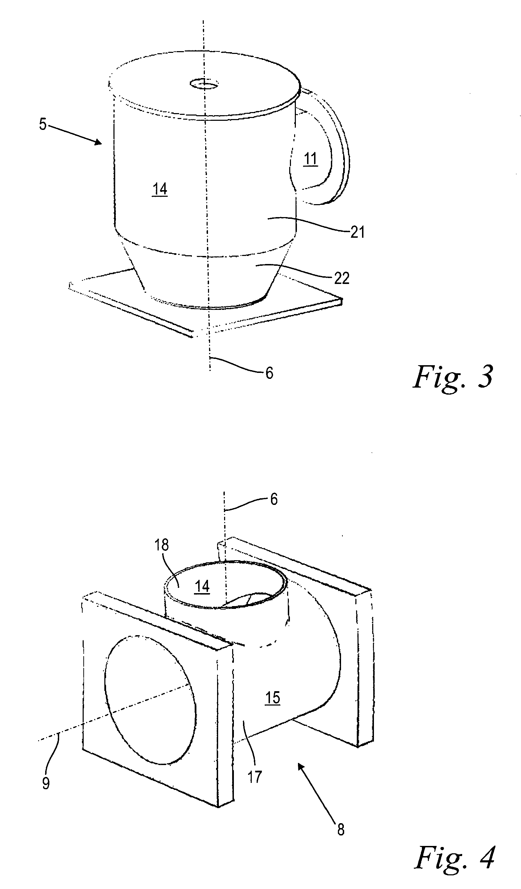

Für die Einspeisung des keramischen Massenstroms aus der Vakuumkammer 4 in den Extruder 7 ist das Einspeisegehäuse 8 vorgesehen, auf welches von oben das Vakuumkammergehäuse 5 der Vakuumkammer 4 aufgeflanscht ist. Das Vakuumkammergehäuse 5 und das Einspeisegehäuse 8 sind als Einzelteile in den Fig. 3 und 4 perspektivisch dargestellt. Dort ist erkennbar, dass das Einspeisegehäuse 8 einen funktional dem Extruder 7 zuzuordnenden Extruderabschnitt 17 und einen funktional der Vakuumkammer 4 zuzuordnenden Vakuumkammerabschnitt 18 aufweist. Aus der Zusammenschau der Fig. 2 und 4 ergibt sich, dass der Extruderabschnitt 17 den Eingangsbereich der Extruderschnecke 16 umschließt, und sich dabei ebenso wie diese entlang der Exruderachse 9 erstreckt. Aus der Zusammenschau der Fig. 1 und 4 ergibt sich dann noch, dass der Extruderabschnitt 17 des Einspeisegehäuses 8 zusammen mit dem gestrichelt angedeuteten Schneckengehäuse 10 das Extrudergehäuse 15 bildet.

Zwar ist der Vakuumkammerabschnitt 18 körperlicher Teil des Einspeisegehäuses 8. Funktional ist er jedoch Teil des Vakuumkammergehäuses 5, welches um die aufrecht stehende Kammerachse 6 herum verläuft.

Insbesondere aus der Zusammenschau der Fig. 3 und 4 ist erkennbar, dass die Kammerwand 14 einen oberen, vorzugsweise zylindrischen Abschnitt 21 aufweist, in den der Mischereinlauf 11 mündet, und an den sich unterhalb ein unterer, vorzugsweise konisch nach unten sich verjüngender Abschnitt 22 anschließt. Der untere Abschnitt 22 mündet seinerseits nach unten in den zylindrischen Vakuumkammerabschnitt 18 des Einspeisegehäuses 8. Ebenso wie der Vakuumkammerabschnitt 18 ist auch der Extruderabschnitt 17 des Einspeisegehäuses 8 zylindrisch ausgestaltet, wobei jedoch der Extruderabschnitt 17 quer zur horizontalen Extruderachse 9 liegende, runde Querschnitte umschließt.

Als erfindungsgemäße Besonderheit ist in diesem Zusammenhang hervorzuheben, dass die Kammerwand 14 zumindest in ihrem unmittelbar an das Extrudergehäuse 15 angrenzenden Bereich einen quer zur Kammerachse 6 liegenden runden Querschnitt umschließt. Zumindest also der Vakuumkammerabschnitt 18 des Einspeisegehäuses 8, welcher funktional zur Vakuumkammer 4 gehört, umschließt einen solchen runden Querschnitt. Die übrigen, eingangsseitig des Vakuumkammerabschnitts 18 liegenden Querschnitte der Vakuumkammer 4 können von der genannten runden Form abweichen. Vorteilhaft sind jedoch die Querschnitte der Vakuumkammer 4 entlang der Kammerachse 6 zumindest im Abschnitt ausgehend vom oberen Mischereinlauf 11 nach unten bis hin zur Einmündung in das Extrudergehäuse 15, also bis hin zur Einmündung in den Extruderabschnitt 17 des Einspeisegehäuses 8 rund. In der gezeigten bevorzugten Ausführungsform sind die Querschnitte der gesamten Vakuumkammer 4, nämlich die Querschnitte des gesamten oberen zylindrischen Abschnittes 21, des gesamten unteren konischen Abschnittes 22 und des gesamten Vakuumkammerabschnittes 18 rund.

Alle vorstehend beschriebenen runden Querschnitte sind kreisrund. Für die Kammerwand 14 der Vakuumkammer 4 gilt ergänzend noch, dass sie entlang der Kammerachse 6 der Kontur der Zuführschnecke 12 folgt und also die Zuführschnecke 12 außenseitig mit geringem Spiel derart umschließt, dass die drehende Zuführschnecke 12 einen entsprechenden Förderdruck aufbauen kann. Im Rahmen der Erfindung müssen die genannten runden Querschnitte jedoch nicht zwingend kreisrund sein. Es können auch elliptische oder ovale Querschnittsformen insbesondere im Bereich der Vakuumkammer 4 dann zweckmäßig sein, wenn beispielsweise keine Zuführschnecke 12 zum Einsatz kommt. Jedenfalls ist erkennbar, dass der keramische Massenstrom ausgangsseitig des Mischereinlaufs 11 und insbesondere entlang der gesamten Vakuumkammer 4 bis in den Extruder 7 hinein ausschließlich runde Strömungsquerschnitte durchläuft, ohne dass sich anhaftende Materialansammlungen, Materialbrücken oder dergleichen bilden können.

Weiter ist noch erkennbar, dass am unteren Ende der Vakuumkammer 4, also ausgangsseitig der Zuführschnecke 12 ein Strömungsbereich gebildet ist, in welchem der keramische Massenstrom entgast und optimal vergleichmäßigt ist. Aufgrund des hier vorzufindenden reproduzierbaren Zustandes des keramischen Massenstromes ist gemäß der Erfindung im Übergangsbereich von der Vakuumkammer 4 zum Extruder 7, genauer im Vakuumabschnitt 18 des Einspeisegehäuses 8 mindestens ein Sensor 13 für die Zustandsbestimmung des keramischen Massenstromes angeordnet. Dieser in Fig. 1 nur schematisch angedeutete Sensor 13 ist je nach Bedarf ein Drucksensor, ein Feuchtesensor und/oder ein Temperatursensor. Im gezeigten Ausführungsbeispiel werden Druck, Feuchte und Temperatur des keramischen Massenstroms aufgenommen. Dabei ist der Sensor 13 Teil eines zeichnerisch nicht dargestellten Regelkreises für die Betriebsregelung der Extruderanordnung. Über den Feuchtesensor wird die Wasserzufuhr eingangsseitig des Mischers 1 derart nachgeregelt, dass sich an der Messstelle des Sensors 13 eine möglichst konstante Materialfeuchte im keramischen Massenstrom einstellt. Abhängig vom Messsignal des Drucksensors werden die Drehzahlen und damit die Förderleistungen des Mischers 1 und der Zuführschnecke 12 derart geregelt, dass im Eingangsbereich des Extruders 7 möglichst konstante Druckverhältnisse bei einem möglichst konstanten Massenstrom einstellen.

## Patentansprüche

1. Extruderanordnung für einen keramischen Massenstrom, umfassend einen Extruder (7) mit einem Extrudergehäuse (15) und mit einer Extruderschnecke (16), wobei sich der Extruder (7) entlang einer liegenden Extruderachse (9) erstreckt, des Weiteren umfassend eine in den Extruder (7) mündende Vakuumkammer (4) zur Entgasung des keramischen Massenstromes, wobei die Vakuumkammer (4) eine Kammerwand (14) aufweist, welche um eine aufrechte Kammerachse (6) herum verläuft,
**dadurch gekennzeichnet, dass** die Kammerwand (14) zumindest unmittelbar angrenzend an das Extrudergehäuse (15) einen quer zur Kammerachse (6) liegenden runden und insbesondere kreisrunden Querschnitt umschließt.

2. Extruderanordnung nach Anspruch 1,
**dadurch gekennzeichnet, dass** die Extruderanordnung einen eingangsseitig der Vakuumkammer (4) angeordneten Mischer (1) für den keramischen Massenstrom aufweist, welcher sich entlang einer liegenden Mischerachse (3) erstreckt, dass
die Vakuumkammer (4) oberhalb des Extruders (7) einen Mischereinlauf (11) für den Mischer (1) aufweist, und dass die Kammerwand (14) entlang der Kammerachse (6) zumindest vom Mischereinlauf (11) bis zum Übergang in den Extruder (7) einen runden und insbesondere kreisrunden Querschnitt umschließt.

3. Extruderanordnung nach Anspruch 1 oder 2,
**dadurch gekennzeichnet, dass** die Extruderanordnung ein Einspeisegehäuse (8) zur Einspeisung des keramischen Massenstromes aus der Vakuumkammer (4) in den Extruder (7) umfasst, wobei das Einspeisegehäuse (8) einen die Extruderschnecke (16) umschließenden Extruderabschnitt (17) und einen in den Extruderabschnitt (17) mündenden Vakuumkammerabschnitt (18) aufweist, und wobei der Extruderabschnitt (17) und der Vakuumkammerabschnitt (18) beide jeweils einen runden, insbesondere einen kreisrunden Querschnitt umschließen.

4. Extruderanordnung nach einem der Ansprüche 1 bis 3,
**dadurch gekennzeichnet, dass** in der Vakuumkammer (4) eine aufrecht und insbesondere koaxial zur Kammerachse (6) ausgerichtete Zuführschnecke (12) angeordnet ist.

5. Extruderanordnung nach Anspruch 4,
**dadurch gekennzeichnet, dass** die Kammerwand (14) entlang der Zuführschnecke (12) einen kreisrunden, die Zufuhrschnecke (12) umschließenden Querschnitt aufweist.

6. Extruderanordnung nach einem der Ansprüche 1 bis 5,
**dadurch gekennzeichnet, dass** mindestens ein Sensor (13) für die Zustandsbestimmung des keramischen Massenstrom im Übergangsbereich von der Vakuumkammer (4) zum Extruder (7) und insbesondere im Einspeisegehäuse (8) angeordnet ist.

7. Extruderanordnung nach Anspruch 6,
**dadurch gekennzeichnet, dass** der mindestens eine Sensor (13) ein Drucksensor, ein Feuchtesensor und/oder ein Temperatursensor ist.

8. Extruderanordnung nach Anspruch 6 oder 7,
**dadurch gekennzeichnet, dass** der mindestens eine Sensor (13) Teil eines Regelkreises für die Betriebsregelung der Extruderanordnung ist.
